# EUROPEAN PATENT APPLICATION

(11) **EP 2 881 847 A1**
(43) Date of publication of application: **10.06.2015**
(21) Application number: 13826063.3
(22) Date of filing: 25.06.2013
(51) Int. Cl.: G06F 3/048

(54) **METHOD AND DEVICE FOR TRANSVERSELY LAYING OUT LIST COMPONENT ON TERMINAL**

(30) Priority: 30.07.2012 CN 201210267042
(71) Applicant: ZTE Corporation, Shenzhen, Guangdong 518057 (CN)
(72) Inventor: TENG, Fei, Shenzhen Guangdong 518057 (CN)
(74) Representative: Gevers Patents
(86) International application number: PCT/CN2013/077930
(87) International publication number: WO 2014/019425

(57) **Abstract**

A method and device for lateral layout of a list on a terminal are described, including: configuring a base layer scrolling laterally after a list is loaded; configuring in the base layer a list layer in which list entries are arranged laterally; loading corresponding style and data in each list sub-entry of the list entries; displaying the obtained list in lateral layout. When lateral display is implemented on a terminal, the lateral layout of the list may take full advantage of the space of the entire page to have more content displayed. From the point of view of code programming, a list in lateral layout is simple to implement in comparison with a list in longitudinal layout. The personalized configuration by the user allows lists with different styles and manners to be made, for example, the letters or scrolls in antique pattern, which have novel appearance remarkably differing from the monotonous longitudinal list. Moreover, the lateral layout list accords with the operation habit of users.

## Description

### TECHNICAL FIELD

The disclosure relates to the field of display technology applied on a terminal, in particular to a method and device for lateral layout of a list on a terminal.

### BACKGROUND

At present, relevant lists either on a browser side or on a cell phone side are arranged longitudinally, that is, all the sub-entries of each list are arranged line by line. Although this mode conforms to the operation habits of users, it is somehow monotonous and probably leads to visual fatigue. Moreover, the development process of longitudinal layout appears to be much more complex. At present, display screens of terminals, which are mostly of a rectangle shape, have functions of lateral display and longitudinal display. In the case of lateral display, a relevant list is still in longitudinal layout, that is, all the sub-entries of each list are arranged line by line and their scrolling direction is still up and down, which therefore leads to less content to be displayed.

For example, the list layout on a cell phone (such a telephone book), which is always in a longitudinal mode, is merely applied to a longitudinal (vertical) screen display state. Nowadays, the majority of smart phones support a lateral/longitudinal screen mode, a rotation of 90° of cell phones will make them displayed in a longitudinal mode. If the list is still presented in longitudinal layout, the amount of displayed information appears to be much less.

Therefore, a list design is needed at present, which is desired to accord with operation habits of users, enrich current list layout, and furthermore be easy to operate.

### SUMMARY

The technical problem to be solved by in the embodiments of the disclosure is to provide a method and device for lateral layout of a list on a terminal, which are for providing a new list needed by the prior art.

In order to solve the problem describe above, on the one hand, an embodiment of the disclosure provides a method for lateral layout of a list on a terminal, which includes:
configuring a base layer scrolling laterally after a list is loaded; configuring in the base layer a list layer in which list entries are arranged laterally;
loading corresponding style and data in each list sub-entry of the list entries; and displaying an obtained list in lateral layout.

In an embodiment, before the obtained lateral layout list is displayed, the method further may include:
binding a function, an event effect, an animation effect to be implemented by each list sub-entry with a corresponding list sub-entry.

In an embodiment, after the corresponding list sub-entry is clicked, the corresponding list sub-entry is extended to cover the whole screen of the terminal.

In an embodiment, after the list is loaded, the method further may include:
determining whether personalized style parameters have been uploaded by a user or not after the list is loaded; if uploaded, configuring the personalized style parameters to obtain a load style of the list; otherwise, performing configuration with default parameters to obtain the load style of the list.

In an embodiment, after the list is loaded, the method further may include:
determining whether the display implemented on the terminal is lateral screen display before the list is loaded; if it is lateral screen display, loading the list; otherwise, implementing the load display in a longitudinal screen mode.

On the other hand, the embodiments of the disclosure relate to a device for lateral layout of a list on a terminal, which includes:
a processing module, configured to configure a base layer scrolling laterally after a list is loaded, configure in the base layer a list layer in which list entries are arranged laterally, and load corresponding style and data in each list sub-entry of the list entries; and
a display module, configured to display an obtained list in lateral layout.

In an embodiment, the device further may include:
a bind module, configured to bind a function, an event effect and an animation effect to be implemented by each list sub-entry to a corresponding list sub-entry.

In an embodiment, the device further may include:
a list sub-entry processing module, configured to, after the corresponding list sub-entry is clicked, extend the corresponding list sub-entry to cover the whole screen of the terminal.

In an embodiment, the device further may include:
a configuration module, configured to determine whether personalized style parameters have been uploaded by a user or not after the list is loaded; if uploaded, configure the personalized style parameters to obtain the load style of the list; otherwise, perform configuration with default parameters to obtain the load style of the list.

In an embodiment, the device further may include:
a determination module, configured to determine whether display implemented on the terminal is lateral screen display before the list is loaded, if it is lateral screen display, load the list; otherwise, implement the load display in a longitudinal screen mode.

The benefits of the disclosure are:
When the embodiments of the disclosure implement lateral display on a terminal, the lateral layout of the list may take full advantage of the space of the entire page to have more content displayed. From the point of view of code programming, a list in lateral layout is simple to implement in comparison with a list in longitudinal layout. The personalized configuration by the user allows lists with different styles and manners to be made, for example, letters or scroll in antique pattern, which have novel appearance remarkably differing from the monotonous longitudinal list. Moreover, the list in lateral layout accords the operation habit of users.

### BRIEF DESCRIPTION OF THE DRAWINGS

Fig. 1 is a flow chart of a method for lateral layout of a list on a terminal according to an embodiment of the disclosure;
Fig. 2 is a structure view of a device for lateral layout of a list on a terminal according to an embodiment of the disclosure;
Fig. 3 is a structure view of another device for lateral layout of a list on a terminal according to an embodiment of the disclosure; and
Fig. 4 is a comparison diagram of the display of a list in lateral layout and a list in longitudinal layout on a terminal.

### DETAILED DESCRIPTION

In order to provide a new list which is required by the prior art, the embodiments of the disclosure provide a method and device for lateral layout of a list on a terminal, which will be illustrated below in detail in combination with accompanied drawings and the embodiments. It should be understood that the specific embodiments described here are just for illustrating the disclosure, but not to limit it.

The terminal in the embodiments is a terminal provided with a function of lateral display, such as smart phone, a tablet computer or other equipment. The lateral display of a list of the terminal refers to display of the list in left-and-right arrangement on the terminal screen, the display being controlled by lateral scrolling. The longitudinal display of a list of the terminal refers to display of the list in top-and-bottom arrangement on the terminal screen, the display being controlled by longitudinal scrolling.

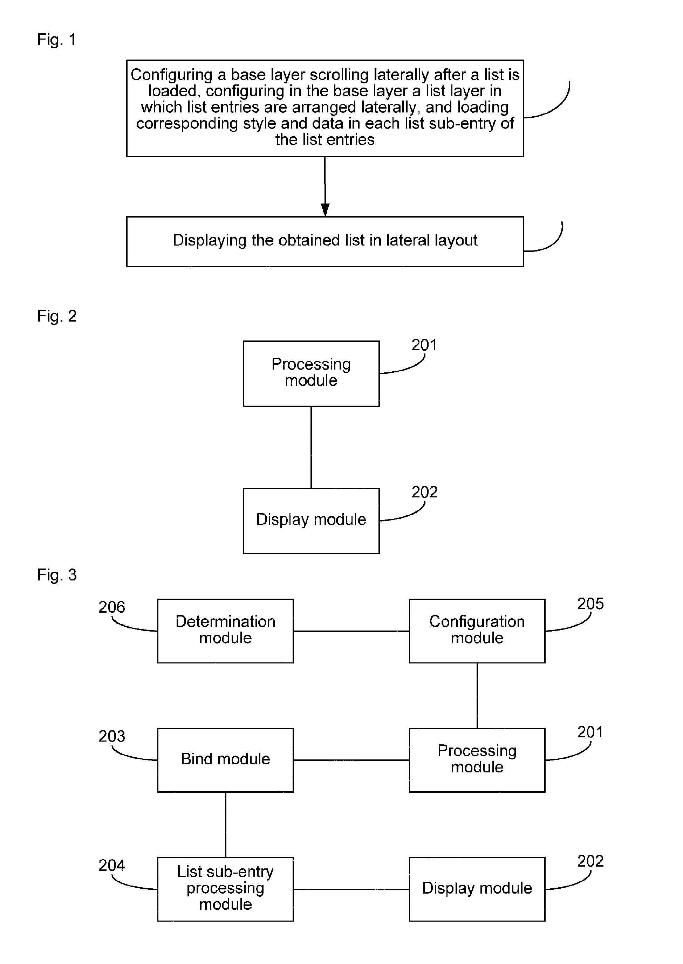

As shown in Fig. 1, an embodiment of the disclosure relates to a method for lateral layout of a list on a terminal, which includes that:
Step S101: a base layer scrolling laterally is configured after a list is loaded; a list layer in which list entries are arranged laterally is configured in the base layer; corresponding style and data are loaded in each list sub-entry of the list entries.

In this step, the list is loaded by an application which needs the list, for example, an address book loads the list.

In this step, the list is drawn, i.e., the base layer is drawn firstly. The base layer is a bottom display layer of the list and is to be drawn by the list at the bottom layout. When the list entries go beyond a boundary, it is possible to scroll laterally according to the length of the list entries. Then a list layer is drawn in the base layer according to the configuration. The list layer is for having the to-be-loaded list entries subject to a function processing to make them listed in lateral arrangement, that is, each list sub-entry is processed and arranged laterally. At the same time, every list sub-entry is clicked; if there is content in a list sub-entry, the list sub-entry is elastically zoomed and its content is displayed. A sub-entry layer is responsible for processing the display and layout of every sub-entry, that is, when a list entry is released, a layout entry is to be loaded, the processing and control will be performed according to the uploaded personalized style parameters (i.e. processing the style to be loaded and the data to be displayed by each list sub-entry). After the list layer is drawn, the style and data will be loaded specifically according to every sub-entry layer. For example, the content to be loaded for a novel is text, while the contents to be loaded for the name card holder of the telephone book are figures and other information.

Step S102: the obtained list in lateral layout is displayed.

In this step, after every part of the list in lateral layout has been drawn and loaded, the list in lateral layout will be displayed entirely.

In addition, in order to achieve a better technical effect, after the base layer, list layer and sub-entry layer all have been configured, it is further necessary to bind a function, an event effect and an animation effect to be implemented with each corresponding object (a corresponding list sub-entry). For example, a click on one sub-entry may extend the sub-entry to cover the whole screen, which is an event which is bound with the sub-entry. In addition, whether to extend dynamically or to cover the whole screen in a moment is related to the binding with the animation effect. After a certain list sub-entry is clicked, the list sub-entry may extend or shrink, loading data during the shrink.

In the method described above, in order to display the personalization of the list, it is also necessary to determine whether an application needs a personalized list or not after the list is loaded, that is, determining whether personalized style parameters have been uploaded or not; if personalized style parameters have been uploaded, relevant parameters are replaced and configured in the list according to the personalized style parameters, otherwise, the configuration is performed with default parameters and data in the list. In this case, the default parameters and data refer to those which are put in the list by designers or developers of the list. The aim of customizing the list by users is achieved by logical processing which is in combination with the introduced parameters and data to perform further function processing according to preset functions.

In addition, a current terminal generally has functions of lateral display and longitudinal display. In order to make both of them compatible with each other, in the steps described above, it is also needed to determine the display mode of the terminal. Firstly it should be determined that the current display mode of the terminal is in a lateral mode or in a longitudinal mode. In the case of the former, the list is loaded, step S101 is executed, in which the list in lateral layout is adopted for display. In the longitudinal mode, the conventional longitudinal list mode is adopted for loading. Moreover, each time the terminal is rotated, which leads to the switch of current screen mode, the display mode of the current screen will be determined again.

As shown in Fig. 2, an embodiment of the disclosure relates to a device for lateral layout of a list on a terminal implementing the method described above, which includes that:
a processing module 201, configured to configure a base layer scrolling laterally after a list is loaded, configure in the base layer a list layer in which list entries are arranged laterally, load corresponding style and data in each list sub-entry of the list entries. The processing module 201 is further configured to perform a functional and logical processing on the list to be displayed, so as to ensure the lateral layout of the list, to be capable of responding to dynamic effects such as elastic zooming, and to perform a personalized configuration according to the parameters which are sent from an upper layer. In this case, the fact that the processing module 201 performs the functional and logical processing on the list to be displayed is the same as the processing in existing longitudinal display except for corresponding coordination transformation, which will not be described in detail in this embodiment.

A display module 202, configured to display the obtained list in lateral layout.

For a better technical effect, as shown in Fig. 3, an embodiment of the disclosure relates to another device for lateral layout of a list on a terminal implementing the method described above, which includes that:
a processing module 201, configured to configure a base layer scrolling laterally after a list is loaded, configure in the base layer a list layer in which list entries are arranged laterally, load corresponding style and data in each list sub-entry of the list entries. The processing module 201 is further configured to perform a functional and logical processing on the list to be displayed, so as to ensure the lateral layout of the list, to be capable of responding to dynamic effects such as elastic zooming, and to perform a personalized configuration according to the parameters which are sent from an upper layer.

A display module 202, configured to display the obtained list in lateral layout. It is additionally configured to compute and process a core code, and perform personalized configuration on the list according to various parameters which are sent from a configuration module.

A bind module 203, configured to bind a function, an event effect and an animation effect to be implemented by each list sub-entry with a corresponding list sub-entry.

A list sub-entry processing module 204, configured to click the corresponding list sub-entry, extend the list sub-entry to cover the whole screen.

A configuration module 205, configured to determine whether personalized style parameters have been uploaded by a user or not after the list is loaded; if uploaded, configure the personalized style parameters to obtain the load style of the list; otherwise, perform configuration with default parameters to obtain the load style of the list. The configuration module 205 is a set of interfaces provided for upper layer developers or users. A user may through the interfaces, on the one hand, configure a list style or an effect, for example, the style (display attributes such as colour, dimension, frame, shape) and effect (dynamic attributes such as extending and shrinking effect of list entries) of the list, on the other hand, the user may load data for each list sub-entry of the list.

A determination module 206, configured to determine whether the display on the terminal is lateral screen display before the list is loaded. If it is a lateral display, load the list; otherwise, implement the load display in a longitudinal screen mode.

The embodiments of the disclosure provide a lateral multi-layer list, which include not only list layout and the switch with conventional longitudinal list layout, but also the design method and concept of a lateral list which could be a template for homogeneous lateral lists. At the same time, the disclosure may be implemented with, but not limited to, javascript. For example, it may be implemented with java in Android or with Objective-C in iOS. Here javascript is taken as an example.

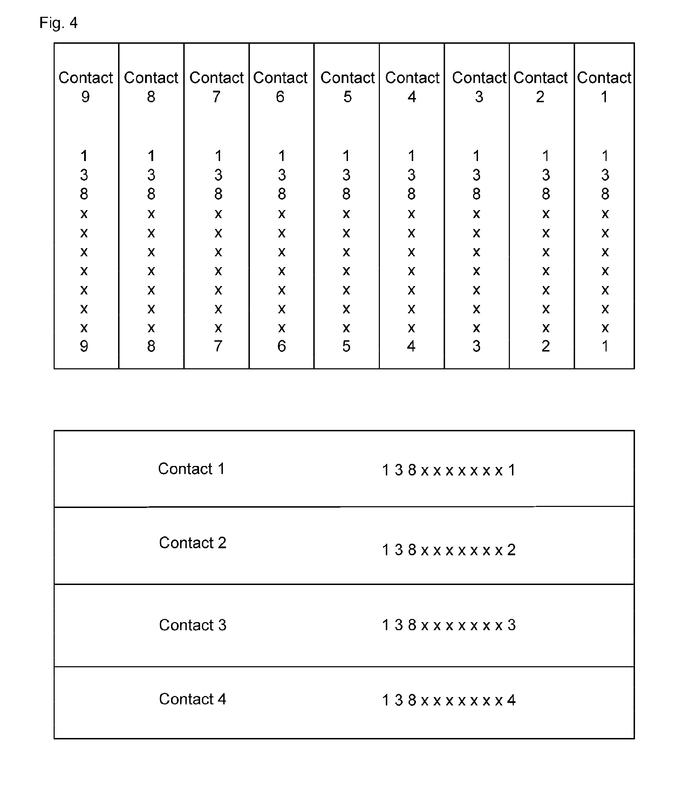

It can be seen from the embodiments described above that, as shown in Fig. 4, when the embodiments of the disclosure implement lateral display on a terminal, the lateral layout of the list may take full advantage of the space of the entire page to have more content displayed. In terms of code programming, a list in lateral layout is simple to implement in comparison with a list in longitudinal layout. The personalized configuration by a user allows lists with different styles and manners to be made, for example, letters or scrolls in antique pattern, which have novel appearance remarkably differing from the monotonous longitudinal list. Moreover, the list in lateral layout accords with the operation habit of users.

Though the preferable embodiments of the disclosure have been disclosed for illustration, those skilled in the art will appreciate that various modifications, additions and replacements are also possible. Thus the scope of the disclosure should not be limited to the embodiments described above.

## Claims

1. A method for lateral layout of a list on a terminal, comprising:
configuring a base layer scrolling laterally after a list is loaded; configuring in the base layer a list layer in which list entries are arranged laterally;
loading corresponding style and data in each list sub-entry of the list entries; and
displaying an obtained list in lateral layout.

2. The method for lateral layout of a list on a terminal according to claim 1, before displaying the obtained list in lateral layout, the method further comprising:
binding a function, an event effect, an animation effect to be implemented by each list sub-entry with a corresponding list sub-entry.

3. The method for lateral layout of a list on a terminal according to claim 2, wherein after the corresponding list sub-entry is clicked, the corresponding list sub-entry is extended to cover a whole screen of the terminal.

4. The method for lateral layout of a list on a terminal according to claim 1, after loading the list, the method further comprising:
determining whether personalized style parameters have been uploaded by a user or not after the list is loaded; if uploaded, then configuring the personalized style parameters to obtain a load style of the list; otherwise, performing configuration with default parameters to obtain the load style of the list.

5. The method for lateral layout of a list on a terminal according to any of claims 1 to 4, further comprising:
determining whether display implemented on the terminal is lateral screen display before the list is loaded; if it is lateral screen display, then loading the list; otherwise, performing load display in a longitudinal screen mode.

6. A device for lateral layout of a list on a terminal, comprising:
a processing module, configured to configure a base layer scrolling laterally after a list is loaded, configure in the base layer a list layer in which list entries are arranged laterally, and load a corresponding style and data in each list sub-entry of the list entries; and
a display module, configured to display an obtained list in lateral layout.

7. The device for lateral layout of a list on a terminal according to claim 6, further comprising:
a bind module, configured to bind a functions, an event effect and an animation effect to be implemented by each list sub-entry with a corresponding list sub-entry.

8. The device for lateral layout of a list on a terminal according to claim 7, further comprising:
a list sub-entry processing module, configured to, after the corresponding list sub-entry is clicked, extend the corresponding list sub-entry to cover a whole screen of the terminal.

9. The device for lateral layout of a list on a terminal according to claim 6, further comprising:
a configuration module, configured to determine whether personalized style parameters have been uploaded by a user or not after the list is loaded; if uploaded, configure the personalized style parameters to obtain a load style of the list; otherwise, perform configuration with default parameters to obtain the load style of the list.

10. The device for lateral layout of a list on a terminal according to any of claims 6 to 9, further comprising:
a determination module, configured to determine whether display implemented on the terminal is lateral screen display before the list is loaded; if it is lateral screen display, load the list; otherwise, implement load display in a longitudinal screen mode.
